# EUROPÄISCHE PATENTANMELDUNG

(11) **EP 4 656 032 A1**
(43) Veröffentlichungstag der Anmeldung: **03.12.2025**
(21) Anmeldenummer: 25178761.0
(22) Anmeldetag: 26.05.2025
(51) Int. Cl.: A01D 43/08, A01F 29/10

(54) **VORSATZGERÄT FÜR EINE LANDWIRTSCHAFTLICHE ERNTEMASCHINE UND LANDWIRTSCHAFTLICHE ERNTEMASCHINE**

(30) Priorität: 28.05.2024 DE 102024114967
(71) Anmelder: CLAAS Saulgau GmbH, 88348 Bad Saulgau (DE)
(72) Erfinder: König, Christian, 88094 Oberteuringen (DE); Wälder, Florian, 72517 Sigmaringendorf (DE); Kaufmann, Christoph, 88367 Hohentengen (DE); Blender, Sebastian, 88634 Herdwangen-Schönach (DE)

(57) **Zusammenfassung**

Vorsatzgerät (10) für eine landwirtschaftliche Erntemaschine, mit einem Hauptrahmen (11), der zur Ankopplung des Vorsatzgeräts (10) an die landwirtschaftliche Erntemaschine eingerichtet ist, und mit einer Erntegutfördereinrichtung (12), die am Hauptrahmen (11) über Träger (15) derart befestigt ist, dass die Erntegutfördereinrichtung (12) an den Trägern (15) drehbar gelagert ist und zusammen mit den Trägern (15) gegenüber dem Hauptrahmen (11) schwenkbar ist, wobei die Erntegutfördereinrichtung (12) in Zusammenwirkung mit einem Bodenblech (14) zur Förderung des Ernteguts eingerichtet ist. Direkt oder indirekt am Hauptrahmen (11) und an mindestens einem Träger (15) oder einem mit den Trägern (15) verbundenen Hilfsrahmen (19) greift mindestens ein Hydraulikzylinder (18) an, wobei der mindestens eine Hydraulikzylinder (18) eingerichtet ist, um einerseits die Erntegutfördereinrichtung (12) unter einer definierten Vorspannung in Richtung auf das Bodenblech (14) zu drücken oder zu ziehen.

## Beschreibung

Die Erfindung betrifft ein Vorsatzgerät für eine landwirtschaftliche Erntemaschine und eine landwirtschaftliche Erntemaschine mit einem Vorsatzgerät.

DE 10 2012 011 574 B4 offenbart ein als Aufnahmevorrichtung ausgebildetes Vorsatzgerät für eine landwirtschaftliche Erntemaschine. Die Aufnahmevorrichtung weist einen Hauptrahmen auf, der zur Ankopplung der Aufnahmevorrichtung an die landwirtschaftliche Erntemaschine ausgebildet ist. Ferner weist die Aufnahmevorrichtung eine Erntegutaufnahmeeinrichtung und eine Erntegutfördereinrichtung auf. Die Erntegutaufnahmeeinrichtung ist am Hauptrahmen befestigt und zur Erntegutaufnahme von einem Untergrund eingerichtet. Die Erntegutfördereinrichtung ist am Hauptrahmen über Träger schwenkbar befestigt, wobei die Erntegutfördereinrichtung in Zusammenwirkung mit einem Bodenblech zur Förderung des durch die Erntegutaufnahmeeinrichtung aufgenommenen Ernteguts eingerichtet ist.

DE 198 47 891 A1 offenbart ein weiteres als Aufnahmevorrichtung ausgebildetes Vorsatzgerät für eine landwirtschaftliche Erntemaschine mit einer Erntegutaufnahmeeinrichtung und einer Erntegutfördereinrichtung.

Es ist aus der Praxis bekannt, die Erntegutfördereinrichtung einer solchen Aufnahmevorrichtung über mindestens einen einfachwirkenden Hydraulikzylinder entgegen der Federkraft mindestens eines Federelements auszuheben bzw. anzuheben, also vom Bodenblech wegzubewegen. Das mindestens eine Federelement zieht oder drückt die Erntegutfördereinrichtung unter Bereitstellung einer Vorspannung zwischen Erntegutfördereinrichtung und Bodenblech in Richtung auf das Bodenblech. Die Federkraft des mindestens einen Federelements wirkt dem Anheben bzw. Ausheben der Erntegutfördereinrichtung entgegen, wodurch die zulässige Federkraft des Federelements und damit Vorspannung zwischen Erntegutfördereinrichtung und Bodenblech begrenzt ist.

Es besteht Bedarf daran, die Vorspannung der Erntegutfördereinrichtung in Richtung auf das Bodenblech zu erhöhen, um den Transport des Ernteguts zu verbessern.

Hiervon ausgehend liegt der vorliegenden Erfindung die Aufgabe zugrunde, ein neuartiges Vorsatzgerät für eine landwirtschaftliche Erntemaschine und eine landwirtschaftliche Erntemaschine mit einem solchen Vorsatzgerät zu schaffen.

Diese Aufgabe wird durch ein Vorsatzgerät nach Anspruch 1 und eine landwirtschaftliche Erntemaschine nach Anspruch 10 gelöst.

Erfindungsgemäß greift direkt oder indirekt am Hauptrahmen und an mindestens einem Träger oder an einem mit den Trägern verbundenen Hilfsrahmen mindestens ein Hydraulikzylinder an, wobei der mindestens eine Hydraulikzylinder eingerichtet ist, um einerseits die Erntegutfördereinrichtung unter Bereitstellung einer definierten Vorspannung in Richtung auf das Bodenblech zu drücken oder zu ziehen, und um anderseits die Erntegutfördereinrichtung vom Bodenblech wegzubewegen.

Das erfindungsgemäße Vorsatzgerät nutzt zur Bereitstellung der definierten Vorspannung zwischen Erntegutfördereinrichtung und Bodenblech sowie für das Abheben bzw. Ausheben der Erntegutfördereinrichtung vom Bodenblech mindestens einen Hydraulikzylinder. Hierdurch kann bei geringem Bauraumbedarf gegenüber der aus dem Stand der Technik bekannten Lösung, welche Federelemente nutzt, die Vorspannung zwischen Erntegutfördereinrichtung und Bodenblech erhöht werden, um so das Erntegut im Bereich der Erntegutfördereinrichtung optimal zu transportieren.

Vorzugsweise greift zu beiden Seiten der Erntegutfördereinrichtung an dem Hauptrahmen und an dem jeweiligen Träger oder an dem Hilfsrahmen jeweils ein Hydraulikzylinder an. Diese Ausführung ist besonders bevorzugt, um über die Längserstreckung der Erntegutfördereinrichtung eine möglichst gleichmäßige definierte Vorspannung derselben in Richtung auf das Bodenblech bereitzustellen.

Vorzugsweise ist der jeweilige Hydraulikzylinder als doppeltwirkender Hydraulikzylinder ausgeführt und weist einen Zylinder und einen im Zylinder verlagerbaren Kolben auf, wobei zu beiden Seiten des Kolbens jeweils eine Hydraulikkammer ausgebildet ist. Dann, wenn eine erste Hydraulikkammer mit Hydrauliköl befüllt wird, wird die Erntegutfördereinrichtung unter Bereitstellung der Vorspannung zwischen Erntegutfördereinrichtung und Bodenblech in Richtung auf das Bodenblech gedrückt oder gezogen. Dann, wenn eine zweite Hydraulikkammer mit Hydrauliköl befüllt wird, wird die Erntegutfördereinrichtung vom Bodenblech wegbewegt. Diese Ausführung ist konstruktiv besonders einfach und benötigt wenig Bauraum.

Vorzugsweise ist die erste Hydraulikkammer über eine erste Hydraulikleitung mit einem Hydraulikspeicher und einer Hydraulikpumpe gekoppelt, wobei in der ersten Hydraulikleitung ein schaltbares Ventil angeordnet ist, welches in einer ersten Stellung die Hydraulikpumpe mit der ersten Hydraulikkammer verbindet und welches in einer zweiten Stellung die Hydraulikpumpe von der ersten Hydraulikkammer trennt. Der Hydraulikspeicher ist in beiden Stellungen des Ventils mit der ersten Hydraulikkammer verbunden, wobei der Hydraulikspeicher ausschließlich in der ersten Stellung des Ventils mit der Hydraulikpumpe verbunden ist. Auch diese Ausführung ist konstruktiv besonders einfach und benötigt wenig Bauraum.

Vorzugsweise ist das Vorsatzgerät als Aufnahmevorrichtung ausgebildet, die ferner eine Erntegutaufnahmeeinrichtung aufweist, die am Hauptrahmen befestigt ist, wobei die Erntegutaufnahmeeinrichtung zur Erntegutaufnahme von einem Untergrund eingerichtet ist, und wobei die Erntegutfördereinrichtung zur Förderung des durch die Erntegutaufnahmeeinrichtung aufgenommenen Ernteguts eingerichtet ist. Die Erfindung kommt vorzugsweise bei Aufnahmevorrichtungen zum Einsatz, die neben der Erntegutfördereinrichtung auch eine Erntegutaufnahmeeinrichtung aufweisen, um einerseits das Erntegut von einem Untergrund aufzunehmen und nachfolgend das Erntegut mithilfe der Erntegutfördereinrichtung zu transportieren.

In einer weiteren bevorzugten Ausführungsform ist das Vorsatzgerät als Schneidwerk ausgebildet, das ferner eine Mäheinrichtung aufweist, die am Hauptrahmen befestigt ist und dazu eingerichtet ist, Erntegut von einem Feldboden abzutrennen oder abzuschneiden sowie das abgetrennte bzw. abgeschnittene Erntegut an die Erntegutfördereinrichtung zu übergeben, welche dazu eingerichtet ist, das Erntegut quer zu einer Ernterichtung zu fördern.

Die landwirtschaftliche Erntemaschine ist vorzugsweise als selbstfahrender Feldhäcksler ausgeführt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine Seitenansicht eines Details eines als Aufnahmevorrichtung ausgebildeten Vorsatzgeräts für eine landwirtschaftliche Erntemaschine in einem ersten Zustand derselben,
- Fig. 2: einen Ausschnitt aus einem Hydrauliksystem des Vorsatzgeräts der Fig. 1.

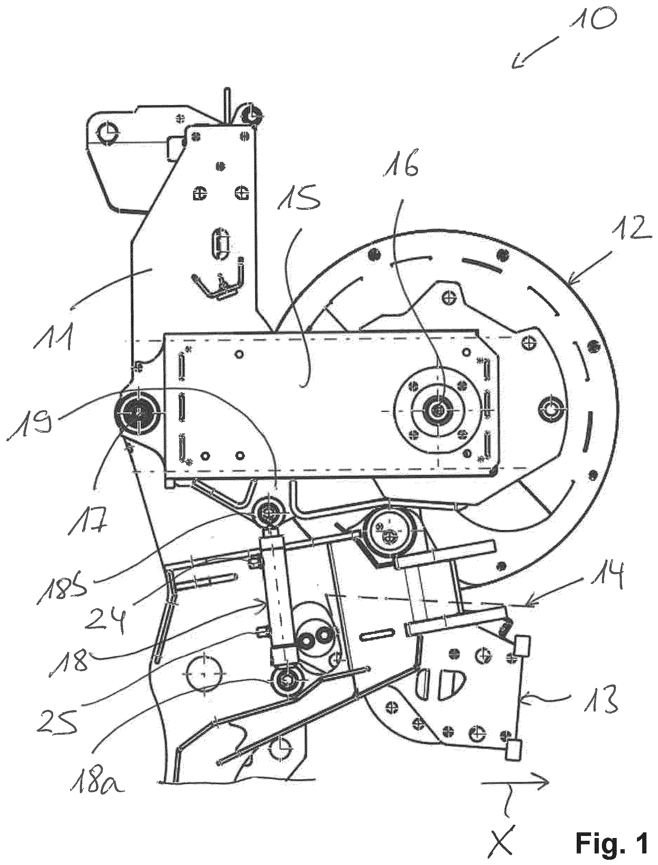

Fig. 1 zeigt eine Seitenansicht eines als Aufnahmevorrichtung für Erntegut ausgebildeten Vorsatzgeräts 10 für eine landwirtschaftliche Erntemaschine.

Das Vorsatzgerät 10 weist einen Hauptrahmen 11 auf, der eingerichtet ist, das Vorsatzgerät 10 an eine landwirtschaftliche Erntemaschine, insbesondere an einen selbstfahrenden Feldhäcksler, anzukoppeln. Das Vorsatzgerät 10 weist eine in Fig. 1 nicht gezeigte Erntegutaufnahmeeinrichtung und eine in Fig. 1 gezeigte Erntegutfördereinrichtung 12 auf. Die in Fig. 1 nicht gezeigte Erntegutaufnahmeeinrichtung ist unterhalb der Erntegutfördereinrichtung 12 an einem Montageflansch 13 des Hauptrahmens 11 montiert. Die Erntegutaufnahmeeinrichtung ist zur Aufnahme von Erntegut von einem Untergrund eingerichtet. Das Erntegut liegt dabei vorzugsweise in Form eines sogenannten Schwads auf dem Untergrund, der in einem vorhergehenden Arbeitsschritt während des Mähens des Ernteguts oder nach dem Mähen gebildet wurde.

Die der Förderung des durch die nicht gezeigte Erntegutaufnahmeeinrichtung aufgenommenen Ernteguts dienende Erntegutfördereinrichtung 12 wirkt mit einem Bodenblech 14 zusammen. Das Bodenblech 14 ist an der nicht gezeigten Erntegutaufnahmeeinrichtung angeordnet und bildet einen Förderboden für die Erntegutfördereinrichtung 12.

Zum Transport des Ernteguts wird die Erntegutfördereinrichtung 12 mit einer definierten Vorspannung in Richtung auf das Bodenblech 14 gedrückt bzw. gezogen.

Die Erntegutfördereinrichtung 12 ist an Trägern 15 drehbar gelagert und über die Träger 15 am Hauptrahmen 11 schwenkbar befestigt. Fig. 1 zeigt eine Drehachse 16, um welche die Erntegutfördereinrichtung 12 drehbar an den Trägern 15 gelagert ist. Zu beiden seitlichen Enden der Erntegutfördereinrichtung 12 ist jeweils ein derartiger Träger 15 angeordnet.

Ferner zeigt Fig. 1 eine Schwenkachse 17, um welche die Träger 15 der Erntegutfördereinrichtung 12 relativ zum Hauptrahmen 11 schwenkbar sind, insbesondere um den Abstand zwischen der Erntegutfördereinrichtung 12 und dem Bodenblech 14 und so eine Vorspannung zwischen Erntegutfördereinrichtung 12 und Bodenblech 14 einzustellen.

Wie bereits ausgeführt, ist in einem Übergabebereich zwischen der in Fig. 1 nicht gezeigten Erntegutaufnahmeeinrichtung und der in Fig. 1 gezeigten Erntegutfördereinrichtung 12 das Bodenblech 14 angeordnet. Das Bodenblech 14 ist dabei unterhalb der Erntegutfördereinrichtung 12 positioniert.

Die Erntegutfördereinrichtung 12, die insbesondere als Querförderschnecke ausgebildet ist, fördert das Erntegut im Zusammenwirken mit dem Bodenblech 14 zu einem Mittenbereich des Vorsatzgeräts 10, wo es an die Erntemaschine weitergegeben wird.

Im Betrieb wird das Vorsatzgerät 10 von der landwirtschaftlichen Erntemaschine in der Fortbewegungsrichtung X bewegt, wobei in dieser Fortbewegungsrichtung X gesehen das Bodenblech 14 hinter der nicht gezeigten Erntegutaufnahmeeinrichtung angeordnet ist.

Um nun den Abstand zwischen der Erntegutfördereinrichtung 12 und dem Bodenblech 14 und damit auch eine Vorspannung zwischen der Erntegutfördereinrichtung 12 und dem Bodenblech 14 definiert einzustellen, weist das Vorsatzgerät 10 mindestens einen Hydraulikzylinder 18 auf, der mit einem ersten Ende 18a direkt oder indirekt gelenkig am Hauptrahmen 11 und mit einem gegenüberliegenden zweiten Ende 18b gelenkig an einem Träger 15 oder an einem mit dem Träger 15 insbesondere fest verbundenen Hilfsrahmen 19 befestigt ist.

Vorzugsweise ist zu beiden Seiten der Erntegutfördereinrichtung 12 jeweils ein derartiger Hydraulikzylinder 18 vorhanden, der einerseits direkt oder indirekt am Hauptrahmen 11 und andererseits an jeweils einem der Träger 15 bzw. am Hilfsrahmen 19 zu beiden Seiten der Erntegutfördereinrichtung 12 gelenkig angreift bzw. gelenkig montiert ist.

Der Hydraulikzylinder (18) ist dazu eingerichtet, die Erntegutfördereinrichtung (12) unter einer definierten Vorspannung in Richtung auf das Bodenblech (14) zu drücken oder zu ziehen. Dazu wird eine Druckkammer des Hydraulikzylinders (18) mit Hydrauliköl befüllt. Entsprechend der Größe der gewünschten Vorspannung, wird der Hydrauliköldruck des eingefüllten Hydrauliköls eingestellt.

Die entsprechende Druckkammer des oder jedes Hydraulikzylinders (18) ist dazu vorzugsweise mit einem Hydraulikspeicher (27) verbunden.

Vorzugsweise ist der oder beide Hydraulikzylinder 18 als doppeltwirkende Hydraulikzylinder ausgeführt.

Über den mindestens einen bevorzugten doppeltwirkenden Hydraulikzylinder 18 kann der Abstand zwischen der Erntegutfördereinrichtung 12 und dem Bodenblech 14 verändert werden. So kann einerseits die Erntegutfördereinrichtung 12 mit einer definierten Vorspannung in Richtung auf das Bodenblech 14 gedrückt oder gezogen werden, andererseits kann die Erntegutfördereinrichtung 12 vom Bodenblech 14 wegbewegt und damit abgehoben bzw. ausgehoben werden, um den Abstand zum Bodenblech 14 zu vergrößern.

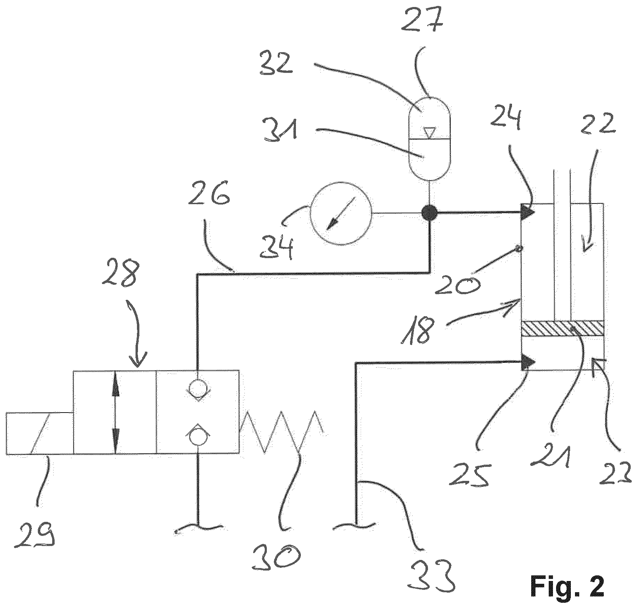

Fig. 2 zeigt einen Ausschnitt aus einem Hydrauliksystem des Vorsatzgeräts 10 mit einem bevorzugten doppeltwirkenden Hydraulikzylinder 18, wobei der doppeltwirkende Hydraulikzylinder 18 einen Zylinder 20 und einen im Zylinder 20 verlagerbaren Kolben 21 aufweist. Zu beiden Seiten des Kolbens 21 ist jeweils eine Hydraulikkammer 22, 23 ausgebildet, wobei mit jeder der Hydraulikkammern 22, 23 jeweils ein Hydraulikanschluss 24, 25 des Hydraulikzylinders 18 zusammenwirkt.

Dann, wenn eine erste Hydraulikkammer 22 mit Hydrauliköl befüllt wird und aus einer zweiten Hydraulikkammer 23 Hydrauliköl abgeführt wird, wird die Erntegutfördereinrichtung 12 auf das Bodenblech 14 gedrückt oder gezogen, wobei eine Vorspannung der Erntegutfördereinrichtung 12 gegenüber dem Bodenblech 14 eingestellt wird. Die Größe der Vorspannung wird durch die Höhe des Hydrauliköldrucks bestimmt. Durch entsprechende Einstellung des Hydrauliköldrucks kann die Vorspannung verändert werden.

Dann, wenn die zweite Hydraulikkammer 23 mit Hydrauliköl befüllt wird und aus der ersten Hydraulikkammer 22 Hydrauliköl abgeführt wird, wird die Erntegutfördereinrichtung 12 vom Bodenblech 14 wegbewegt.

Die erste Hydraulikkammer 22 ist über eine erste Hydraulikleitung 26 mit einem Hydraulikspeicher 27 und einer in Fig. 2 nicht gezeigten Hydraulikpumpe gekoppelt. In diese erste Hydraulikleitung 26 ist ein schaltbares Ventil 28 eingebunden, wobei in der in Fig. 2 gezeigten Sperrstellung des Ventils 28 die nichtgezeigte Hydraulikpumpe von der ersten Hydraulikkammer 22 des doppeltwirkenden Hydraulikzylinders 18 getrennt ist.

In der in Fig. 2 gezeigten Sperrstellung des Ventils 28 ist hingegen der Hydraulikspeicher 27 mit der ersten Hydraulikkammer 22 verbunden. Nimmt das Ventil 28 der Fig. 2 eine Durchlassstellung ein, in die das Ventil 28 über einen Aktuator 29 entgegen der Federkraft eines Federelements 30 verlagerbar ist, so ist die erste Hydraulikkammer 22 des doppeltwirkenden Hydraulikzylinders 18 zusätzlich mit der nicht gezeigten Hydraulikpumpe verbunden.

Der Hydraulikspeicher 27 ist einerseits mit Hydrauliköl 31 und andererseits mit einer Gasfüllung 32 gefüllt. Der von einer Hydraulikpumpe erzeugte Druck des Hydrauliköls 31 im Hydraulikspeicher 27 und in der ersten Hydraulikammer 22 bestimmt die Größe der Vorspannung, mit welcher die Erntegutfördereinrichtung 12 über den mindestens einen Hydraulikzylinder 18 in Richtung auf das Bodenblech 14 gedrückt oder gezogen wird. Über das in Fig. 2 gezeigte Manometer 33 kann der Hydraulikdruck und so die Vorspannung zwischen Erntegutfördereinrichtung 12 und Bodenblech 14 erfasst werden. Alternativ oder zusätzlich kann ein Drucksensor zur Erfassung des Hydrauliköldrucks vorgesehen werden.

Der Hydraulikspeicher 27 dient auch zur Aufnahme von aus der Hydraulikkammer 22 abfließendem Hydrauliköl, wenn die Erntegutfördereinrichtung 12 beispielsweise aufgrund einer zunehmenden Erntegutmenge oder aufgrund eines Fremdkörpers nach oben ausweichen muss.

Die zweite Hydraulikkammer 23 ist über eine zweite Hydraulikleitung 33 mit einer Hydraulikpumpe gekoppelt, um der zweiten Hydraulikkammer 23 Hydrauliköl zuzuführen. Hierdurch kann der Druck in der zweiten Hydraulikkammer 23 erhöht werden, um die Erntegutfördereinrichtung 12 auszuheben und von dem Bodenblech 14 wegzubewegen. Beim Ausheben der Erntegutfördereinrichtung 12 ist das Ventil 28 entgegen der Kraft des Federelements 30 in seine Durchlassstellung überführt, um beim Ausheben bzw. Anheben der Erntegutfördereinrichtung 12 Hydrauliköl aus der ersten Hydraulikkammer 22 abzuführen, sodass beim Ausheben bzw. Anheben der Erntegutfördereinrichtung 12 die Vorspannung deaktiviert bzw. nicht wirksam ist.

Mit der Erfindung kann bei geringem Bauraumbedarf gezielt eine definierte Vorspannung zwischen der Erntegutfördereinrichtung 12 und dem Bodenblech 14 bereitgestellt werden. Hierdurch kann die Leistungsdichte erhöht werden. Ferner kann die Erntegutfördereinrichtung 12 vorteilhaft ausgehoben bzw. angehoben werden. Dies erfolgt jeweils über den mindestens einen bevorzugten doppeltwirkenden Hydraulikzylinder 18, der einerseits direkt oder indirekt am Hauptrahmen 11 und andererseits an den Trägern 15 für die Erntegutfördereinrichtung 12 bzw. an einem Hilfsrahmen 19 für dieselbe angreift.

Mit der Erfindung kann die Vorspannung zwischen der Erntegutfördereinrichtung 12 und dem Bodenblech 14 angepasst werden, insbesondere automatisch abhängig von den Erntebedingungen.

Alternativ könnten zum Vorspannen der Erntegutfördereinrichtung 12 auch einfach wirkende Hydraulikzylinder vorgesehen werden, die beispielsweise als Zugzylinder oder als sogenannte Plungerzylinder ausgeführt sind. Entsprechend dem oben beschriebenen doppeltwirkenden Hydraulikzylinder ist auch der Druckraum eines einfach wirkenden Hydraulikzylinders mit einem Hydraulikspeicher verbunden.

### Bezugszeichenliste

- 10: Vorsatzgerät
- 11: Hauptrahmen
- 12: Erntegutfördereinrichtung
- 13: Montageflansch
- 14: Bodenblech
- 15: Träger
- 16: Drehachse
- 17: Schwenkachse
- 18: Hydraulikzylinder
- 18a: Ende
- 18b: Ende
- 19: Hilfsrahmen
- 20: Zylinder
- 21: Kolben
- 22: Hydraulikkammer
- 23: Hydraulikkammer
- 24: Hydraulikanschluss
- 25: Hydraulikanschluss
- 26: Hydraulikleitung
- 27: Hydraulikspeicher
- 28: Ventil
- 29: Aktuator
- 30: Feder
- 31: Hydrauliköl
- 32: Gasfüllung
- 33: Hydraulikleitung
- 34: Manometer/Drucksensor

## Patentansprüche

1. Vorsatzgerät (10) für eine landwirtschaftliche Erntemaschine,
mit einem Hauptrahmen (11), der zur Ankopplung des Vorsatzgeräts (10) an die landwirtschaftliche Erntemaschine eingerichtet ist,
mit einer Erntegutfördereinrichtung (12), die am Hauptrahmen (11) über Träger (15) derart befestigt ist, dass die Erntegutfördereinrichtung (12) an den Trägern (15) drehbar gelagert ist und zusammen mit den Trägern (15) gegenüber dem Hauptrahmen (11) schwenkbar ist, wobei die Erntegutfördereinrichtung (12) in Zusammenwirkung mit einem Bodenblech (14) zur Förderung des Ernteguts eingerichtet ist,
**dadurch gekennzeichnet, dass**
direkt oder indirekt am Hauptrahmen (11) und an mindestens einem Träger (15) oder einem mit den Trägern (15) verbundenen Hilfsrahmen (19) mindestens ein Hydraulikzylinder (18) angreift,
der mindestens eine Hydraulikzylinder (18) eingerichtet ist, um die Erntegutfördereinrichtung (12) unter einer definierten Vorspannung in Richtung auf das Bodenblech (14) zu drücken oder zu ziehen.

2. Vorsatzgerät (10) nach Anspruch 1, **dadurch gekennzeichnet, dass**
eine für die Vorspannung zuständige Druckkammer des oder jedes Hydraulikzylinders (18) mit einem Hydraulikspeicher (27) verbunden ist.

3. Vorsatzgerät (10) nach Anspruch 1 oder 2, **dadurch gekennzeichnet, dass**
der jeweilige Hydraulikzylinder (18) als doppeltwirkender Hydraulikzylinder (18) ausgeführt ist und einen Zylinder (20) sowie einen im Zylinder (20) verlagerbaren Kolben (21) aufweist, wobei zu beiden Seiten des Kolbens (21) eine Hydraulikkammer (22, 23) ausgebildet ist,
dann, wenn eine erste Hydraulikkammer (22) mit Hydrauliköl mit einem vorbestimmten Hydrauliköldruck befüllt wird, die Erntegutfördereinrichtung (12) unter einer daraus resultierenden Vorspannung zwischen Erntegutfördereinrichtung (12) und Bodenblech (14) in Richtung auf das Bodenblech (14) gedrückt oder gezogen wird.

4. Vorsatzgerät (10) nach Anspruch 3, **dadurch gekennzeichnet, dass**
dann, wenn eine zweite Hydraulikkammer (22) mit Hydrauliköl befüllt wird, die Erntegutfördereinrichtung (12) vom Bodenblech (14) wegbewegt wird.

5. Vorsatzgerät (10) nach Anspruch 3 oder 4, **dadurch gekennzeichnet, dass**
die erste Hydraulikkammer (22) über eine erste Hydraulikleitung (26) mit einem Hydraulikspeicher (27) und einer Hydraulikpumpe gekoppelt ist, wobei in der ersten Hydraulikleitung (26) ein schaltbares Ventil (28) angeordnet ist, welches in einer ersten Stellung die Hydraulikpumpe mit der ersten Hydraulikkammer (22) verbindet und welches in einer zweiten Stellung die Hydraulikpumpe von der ersten Hydraulikkammer (22) trennt.

6. Vorsatzgerät (10) nach Anspruch 5, **dadurch gekennzeichnet, dass**
der Hydraulikspeicher (27) in beiden Stellungen des Ventils (28) mit der ersten Hydraulikkammer (22) verbunden ist.

7. Vorsatzgerät (10) nach Anspruch 5 oder 6, **dadurch gekennzeichnet, dass**
die zweite Hydraulikkammer (23) über eine zweite Hydraulikleitung (33) mit einer Hydraulikpumpe gekoppelt ist.

8. Vorsatzgerät (10) nach einem der Ansprüche 1 bis 7, **dadurch gekennzeichnet, dass**
dasselbe als Aufnahmevorrichtung ausgebildet ist, die ferner eine Erntegutaufnahmeeinrichtung aufweist, die direkt oder indirekt am Hauptrahmen (11) befestigt ist, wobei die Erntegutaufnahmeeinrichtung zur Erntegutaufnahme von einem Untergrund eingerichtet ist, und wobei die Erntegutfördereinrichtung (12) zur Förderung des durch die Erntegutaufnahmeeinrichtung aufgenommenen Ernteguts eingerichtet ist.

9. Vorsatzgerät (10) nach einem der Ansprüche 1 bis 7, **dadurch gekennzeichnet, dass** das Vorsatzgerät (10) als Schneidwerk ausgebildet, das ferner eine Mäheinrichtung aufweist, die am Hauptrahmen (11) befestigt ist und dazu eingerichtet ist, Erntegut von einem Feldboden abzutrennen oder abzuschneiden sowie das abgetrennte bzw. abgeschnittene Erntegut an die Erntegutfördereinrichtung (12) zu übergeben, welche dazu eingerichtet ist, das Erntegut quer zu einer Ernterichtung zu fördern.

10. Vorsatzgerät (10) nach einem der vorhergehenden Ansprüche, **dadurch gekennzeichnet, dass** zu beiden Seiten der Erntegutfördereinrichtung (12) direkt oder indirekt am Hauptrahmen (11) und an dem jeweiligen Träger (15) oder an dem Hilfsrahmen (19) jeweils ein doppeltwirkender Hydraulikzylinder (18) angreift.

11. Landwirtschaftliche Erntemaschine, insbesondere selbstfahrender Feldhäcksler, mit einem Vorsatzgerät (10) nach einem der Ansprüche 1 bis 10.
